# EUROPEAN PATENT APPLICATION

(11) **EP 4 427 908 A2**
(43) Date of publication of application: **11.09.2024**
(21) Application number: 24189820.4
(22) Date of filing: 30.09.2022
(51) Int. Cl.: B29C 48/92

(54) **A COMPOSITE POLYSTYRENE PROFILE AND APPARATUS FOR MANUFACTURING SUCH PROFILES**

(30) Priority: 01.10.2021 BE 202105767
(62) Divisional of application: 22199101.1
(71) Applicant: Orac NV, 8400 Oostende (BE)
(72) Inventor: KNOCKAERT, Miguel, 8600 Diksmuide (BE)
(74) Representative: IPLodge bv

(57) **Abstract**

A composite polystyrene profile extending longitudinally from a first end to a second end and comprising a front surface and a back surface, comprising
a. a core portion comprising a polystyrene monopolymer foam extending in the longitudinal direction, the core portion comprising polystyrene foam with a density of the range of 160kg/m³ to 240kg/m³; and
b. a skin portion or layer comprising/consisting of a polystyrene copolymer and surrounding the core portion at least in the longitudinal direction, with a density in the range of 700kg/m³ to 1300kg/m³; wherein
- the polystyrene profile comprises a combined density within the range of 200 to 360 kg/m³; and
- the skin portion comprises a non-uniform thickness in a transversal direction perpendicular to the longitudinal direction;

and associated apparatus for manufacturing these profiles.

## Description

### Technical field

The present disclosure relates to polystyrene profiles and an apparatus for manufacturing thereof, especially to very light polystyrene profiles providing enough impact resistance for being used as skirting board.

### Background art

Skirting boards are commonly used and can be made from a wide variety of materials. Such materials can for instance be or comprise wood, plastic, metal or polystyrene.

Polystyrene skirting boards have the advantage of being light, water and fungi resistant and are easy to handle. They can easily be shortened or adapted, for instance by means of standard working tools. Transport is easy and relatively cheap as they have low weight. Being slightly flexible, they can easily be permanently fixed to a wall, for instance by a suitable glue or adhesive layer, while following the surface of the wall.

Skirting boards need to be resistant to impact from objects such as vacuum cleaners, floor brushes, suitcases, toys (e.g. skateboards, ...), shoes and furniture as e.g. tables or chairs.

In EP2634210 a process for manufacturing composite profiles is disclosed, as well as resulting profiles, which are lightweight.

There exists a need in industry for improved and alternative polystyrene profiles, which are lightweight and optimised for impact resistance, at a minimal cost and weight.

### Summary of the disclosure

It is an objective of the present disclosure to provide a polystyrene profile according to claim 1, and to provide an associated apparatus for manufacturing such profiles, according to the second independent claim.

In a first aspect of the present disclosure, a composite polystyrene profile is disclosed extending longitudinally from a first end to a second end and comprising a front surface and a back surface, comprising
a. a core portion comprising a polystyrene monopolymer foam extending in the longitudinal direction, the core portion comprising polystyrene foam with a density of the range of 160kg/m³ to 240kg/m³;
b. a skin portion or layer comprising a polystyrene copolymer and surrounding the core portion at least in the longitudinal direction, with a density in the range of 700kg/m³ to 1300kg/m³;
wherein
- the polystyrene profile comprises a combined density within the range of 200 to 360 kg/m³; and
- the skin portion comprises a non-uniform thickness in a transversal direction perpendicular to the longitudinal direction.

It is an advantage of embodiment of the present invention, that the profiles provide a comparable or even improved impact resistance with respect to profiles in the prior art which have a skin portion having a uniform thickness in a transversal direction perpendicular to the longitudinal direction.

It is another advantage that the total amount of polystyrene per meter product can be reduced by 15 to 20%, reducing overall material cost, weight and ecological footprint.

Preferably the skin portion comprises or consists of the polystyrene copolymer.

Preferably, the skin portion comprises or consists of a high impact polystyrene copolymer.

Preferably the high impact polystyrene copolymer comprises or consists of HIPS or ABS.

**HIPS** (high impact polystyrene) is a polystyrene that is co-polymerised with polybutadiene to significantly increase the impact resistance. The used HIPS types typically have a strain at break of at least 20%. The quantity and size of the polybutadiene particles determines the final properties.

**ABS** (acrylonitrile butadiene styrene) is a styrene co-polymerised with nitrile groups and butadiene particles. Nitrile is increasing the heat deflection temperature and the butadiene is increasing the toughness. ABS types used have a strain at break of at least 20%.

According to preferred embodiments, the core portion or core is foamed and comprises a General Purpose polystyrene material (GPPS) and a High Impact polystyrene material (HIPS). The HIPS material preferably constitutes between 5 and 25 % of the core material, more preferably between 10 and 20 %. The GPPS material preferably constitutes between 70 and 90% of the core material, more preferably between 75 and 85 %.

**GPPS** (general purpose polystyrene) material is defined as a non-modified pure PS polymer and typically has a strain at break of less than 5%. This material is therefore considered as brittle in the final product but on the other hand allows easy processing during foaming.

Preferably the core portion further comprises a polystyrene copolymer. This provides the advantage that brittle cracking of the core portion can be avoided.

According to preferred embodiments, the polystyrene profile is a skirting board.

According to preferred embodiments, the polystyrene profile has a front surface and a back surface. The front surface preferably corresponds to the surface of the profile which is exposed to impact during use. The front surface preferable corresponds to the surface of the profile which is visible when installed against a wall, or in the connection between a wall and a floor. The back surface is the complement of the front surface. The back surface preferably comprises a floor portion for being in contact with a floor, and a wall portion for being in contact with a wall, when suitably installed.

The front surface preferably comprises sharp details. E.g. it can comprise sharp edges and/or element of detail having small radiuses. In an embodiment, the polystyrene composite profile may have sharp elements of detail or edges, having a radius R of 1 mm or less.

It was found that a reduced thickness of the skin portion at the back side of the composite polystyrene profile when compared to the front side of the profile, can provide enough support to the core layer and can provide a sufficient or improved resistance of the composite substrate against impact on the front surface. While a certain thickness is needed on the front side, which is exposed to impact, the same thickness is not needed at the back side. It was also observed that providing a skin portion on the front side only can result in breaking of the core portion from the back side upon impact on the front side, when bending it too far, or when removing the skirting board back from the wall. Having a reduced thickness of the skin portion or layer at the back side of the profile also results in a relatively more flexible composite profile structure, which is more resilient to impact.

According to preferred embodiments, the core portion is foamed.

According to preferred embodiments, the skin portion is non-foamed. It can for instance have a density between 1000kg/m³ and 1300kg/m³, or between 1040 kg/m³ and 1300kg/m³, or between 1050kg/m³ and 1300kg/m³.

According to alternative embodiments, the skin portion is foamed. It can for instance have a density between 700kg/m³ and 1050kg/m³.

According to preferred embodiments, the skin portion further comprises a filler material, such as for instance talc, CaCO₃ or other fillers known to the skilled person.

According to preferred embodiments, the back surface comprises a surface, preferably a planar surface, suitable for applying glue. According to alternative embodiments, the back surface comprises an adhesive strip for attachment to a wall.

According to preferred embodiments, a variation of the non-uniform thickness in the transversal direction of the skin portion between minimal thickness (or constant thickness) at the front surface and a minimal thickness (or constant thickness) at the back surface is more than 15%, or more than 20%, or more than 25%, or more than 30%, the minimal thickness at the back surface being smaller than the minimal thickness at the front surface.

According to preferred embodiments, the thickness of the skin portion at the front surface and/or the thickness of the skin portion at the back surface is constant or substantially constant.

According to preferred embodiments, a thickness of the skin portion at the front surface is between 0.3 to 1.0 mm, more preferably between 0.5 to 0.9 mm and the thickness of the skin portion at the back surface is within the range of, more preferably between 0.1 to 0.7 mm.

According to preferred embodiments, the material of the skin portion comprises a strain at break of more than 30% and a Young's modulus of more than 1800 MPa (at 20°C and 1 Bar).

According to preferred embodiments, the back surface comprises at least two longitudinally extending support portions, the support portions comprising a part of the core portion and a part of the skin portion. This provides the advantage that the respective part of the skin portion can support and provide enhanced stability to the respective part of the core portion in the respective support portion. It is a further advantage that the support portions comprise the same structure as, i.e. are made in a single process with, the rest of the profiles, improving stability of the product/profile as a whole and of the support portions as such.

Each of the support portions can for instance comprise a flat surface for gluing the profile / skirting board to the wall. The flat surface can for instance extend longitudinally and have a width within the range of 5 to 20 mm or within the range of 10 to 20mm. Preferably, the support portions are arranged parallel, and are arranged for being installed parallel to a wall surface. Preferably, both or all support portions have respective support surfaces which are coplanar.

According to preferred embodiments, the composite polystyrene profile having at least two longitudinally extending support portions comprises a suspended portion in between two adjacent support portions, the suspended portion having a length within the range of 1 cm to 50 cm, more preferably between 1 and 25 cm, or between 1 and 15 cm, or between 1 and 10 cm. In other words, preferably, the suspended portion bridges a gap between two support portions of about 1 to 50 cm.

The hollow space in the suspended portion between the wall (or a plane defined by respective coplanar support portions) and the back surface of the profile acts as an elastic deformation zone during a heavy impact. This allows impact energy absorption and prevents larger damage at the front surface.

According to preferred embodiments, the minimal distance between the suspended portion and a plane defined by respective coplanar support portions, or between the suspended portion and a wall (when installed), is at least 0.5 mm or at least 1 mm, or at least 2 mm, or at least 3 mm. The distance between the suspended portion and a plane defined by respective coplanar support portions may vary along the extent of the suspended portion, preferably between 0.5-30 mm, or between 0.5-25 mm, or between 0.5-20 mm.

According to certain embodiments, the suspended portion may comprise a front surface and back surface. The back surface can be substantially planar. It can for instance be parallel or substantially parallel with a plane defined by respective coplanar support portions. The back surface of the support portion may comprise one or more extensions towards the plane defined by the support portions. For instance, such an extension may be embodied as one or more protrusions. This provides the additional advantage that the suspended portion will receive additional support from the extensions after an initial deformation of the suspended portion, upon impact of an object on the front surface of the suspended portion.

According to preferred embodiments, the composite polystyrene profile comprises a lower surface corresponding to the floor portion, and the suspended portion is arranged at a distance from the lower surface within a range of 1 to 50 cm, or within a range of 1 to 40 cm, or within a range of 1 to 30 cm. Having a continuous skin portion on the back side of the profile or skirting board, which extends and connects the respective parts of the core portions of the at least two support portions, renders the composite profile more flexible and resilient to impact. In these type of configurations the benefit of having a more flexible composite profile is enhanced.

According to preferred embodiments, the core portion comprises a constant average foam density, in at least the transversal direction. Preferably the core portion comprises a constant average foam density along the longitudinal direction. This ensures a constant mechanical strength and initial impact resistance along the front surface of the profile.

According to preferred embodiments, the cell diameter of the core portion is such that 50 % of all cells has a diameter of 100 µm or less and 95% of all cells has a diameter of 400 µm or less.

It was surprisingly found that adding HIPS in the core enables cell walls to stretch more than when the core does not comprise HIPS. It was shown that this results in larger cell diameters and tougher cell walls, which still leads to a sufficient compression strength and toughness for the claimed HIPS concentrations. This was even more pronounced for the HIPS types with the claimed average polybutadiene particle size. It was found that larger HIPS concentrations may jeopardise cell growth.

According to preferred embodiments, the core portion comprises a compression strength of at least 2 N/mm², or at least 3 N/mm².

According to preferred embodiments, the core portion further comprises polybutadiene particles which have an average diameter within the range of 1 to 7 micron, more preferably between 1 to 5 micron, even more preferably between 2 and 3 micron.

It was surprisingly found that the dimension of the polybutadiene particles is an important parameter in defining the mechanical properties of the profile. Indeed, when the polybutadiene particles are too small, impact resistance of the core portion is jeopardised. If the polybutadiene particles are too large, they negatively impact foaming process of the core portion.

According to preferred embodiments, an adhesion strength of the skin portion to the core portion is within the range of 2 to 7 N/mm², more preferably within the range of 3 to 7 N/mm².

According to preferred embodiments, the composite polystyrene profile is manufactured by a coextrusion process.

According to preferred embodiments, the composite polystyrene profile does not comprise residues of oil.

According to preferred embodiments, the composite polystyrene profile further comprises a primer layer on the front surface.

Features and advantages disclosed for one of the above aspects of the present disclosure are hereby also implicitly disclosed for the other aspects, mutatis mutandis, as the skilled person will recognize.

In a second aspect of the present disclosure, a method of manufacturing a composite polystyrene profile according to any of the previous claims, the process comprising the steps of:
a) plasticizing a core polymer composition in a first extruder, the core polymer composition comprising a polystyrene monopolymer, a nucleating agent and a physical blowing agent;
b) plasticizing a skin polymer composition in a second extruder, the skin polymer composition comprising a polystyrene copolymer;
c) feeding the plasticized core polymer composition to a coextrusion mould to form a core portion;
d) after step (c), feeding the skin polymer composition to the coextrusion mould so as to form a plastic composite having a core portion and a skin portion made of the skin polymer composition surrounding and welded to the core portion;
e) passing the plastic composite obtained at the end of step (d) in a cooled calibration unit, to cool and stabilize the shape of the plastic composite,
wherein the skin portion is provided with a non-uniform thickness in a transversal direction perpendicular on the longitudinal direction.

According to preferred embodiments, the non uniform thickness of the skin portion is achieved by providing a difference in flow rate of the skin polymer composition towards the core portion, or towards different portions of the core portion. For instance, a first flow rate of the skin polymer composition towards a first portion of the core portion can be different from a second flow rate of the skin polymer composition towards a second, different portion of the core portion to provide a skin portion with a first thickness at the first portion of the core portion and a skin portion with a second, different thickness at the second portion of the core portion. Preferably, the design of the co-extrusion mould is thereby predetermined such that it comprises supply channels which are arranged and adapted accordingly. According to preferred embodiments, step (e) is provided directly after step (d). This is preferably such that the plastic composite is not allowed to fully freely expand. In other words, such that the plastic composite is allowed to only partially freely expand, or to not freely expand. Preferably, the expansion of the plastic composite is limited to no more than 20%, or no more than 10%, or no more than 5%, in volume. According to preferred embodiments, the expansion of the plastic composite can be controlled or limited by controlling temperatures of (skin and core) melts and calibration unit and predetermined dimensions of the calibration unit.

It is an advantage of that controlling or limiting the free expansion of the plastic composite allows reducing melt pressures within the coextrusion mould, such that no oil is needed as lubricant in the mould and/or calibration unit, resulting in oil-free products (and cooling water).

It is a further advantage that by limiting the free expansion of the plastic composite that the final foam density of the core portion is substantially constant or constant in at least the transversal direction, and typically also in the longitudinal direction.

According to preferred embodiments, a physical blowing agent is provided in said core polymer composition. This physical blowing agent is or comprises preferably CO₂.

According to preferred embodiments, the CO₂ is present in the core polymer composition in an amount of 0,5 to 2 wt%, preferably 0,6 to 1,5 wt%, more preferably 0,8 to 1,2 wt%.

According to preferred embodiments, the core polymer composition comprises a polystyrene monopolymer and is processed in the coextrusion mould at a temperature within the range of 140°C to 152°C, preferably between 144°C and 148°C, and the skin polymer composition is processed in the coextrusion mould at a temperature within the range of 165°C to 185 °C, more preferably within the range of 170°C to 180 °C.

Preferably, plasticizing a core polymer composition in a first extruder is performed at a melt temperature higher than 152°C, or higher than 160°C. The method than preferably further comprises a cooling step (b') after step (a) and before step (c), reducing the melt temperature to the processing temperature in the coextrusion mould. This can be performed for instance by passing the core polymer composition through a melt cooler, which is preferably separate from the extrusion mould. Step (b') preferably occurs in during step (b) or in parallel with step (b).

It was found that these specific temperature ranges for processing the core and skin polymer compositions respectively contribute to an optimal balance between foaming power of the core polymer composition on one side and adhesion strength between the core and skin portion on the other side.

According to preferred embodiments, comprising plasticizing the core polymer composition at a temperature substantially higher than 152°C (or 148°C) and cooling the core polymer composition before entry in the coextrusion mould.

According to preferred embodiments, comprising using vacuum suction technology in the cooled calibration unit. This allows manufacturing profiles with sharp edges, e.g. having features with details having a radius R of 1 mm or less.

According to preferred embodiments, the method further comprising controlling and adapting the feedthrough speed of the plasticised core and skin polymer compositions during the manufacturing process.

In a further aspect of the present disclosure, the use of a composite polystyrene profile according to any of the embodiments of the first aspect as skirting board, door surround, or wall panel is disclosed.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices and methods in this field, the present concepts are believed to represent substantial new and novel improvements, including departures from prior practices, resulting in the provision of more efficient, stable and reliable devices and methods of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

The disclosure will be further elucidated by means of the following description and the appended figures.
- Fig.1 is a generic illustration of a skirting board to a wall.
- Fig. 2 and Fig. 3 illustrate a first embodiment of a composite polystyrene profile according the present disclosure;
- Fig. 4 illustrates the behaviour of alternative embodiments of the present disclosure when exposed to impact loads;
- Fig. 5 illustrates comparative bending test results between embodiments of the present invention and a state of the art reference product;
- Fig. 6 and Fig. 7 illustrate respective foam density distribution of the reference product and typical embodiments of the present disclosure.
- Fig. 8 illustrates a typical manufacturing setup and process allowing the manufacturing of the claimed composite polystyrene profiles.

### Detailed description of preferred embodiments

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order.

The various embodiments, although referred to as "preferred" are to be construed as examples in which the disclosure may be implemented rather than as limiting the scope of the disclosure.

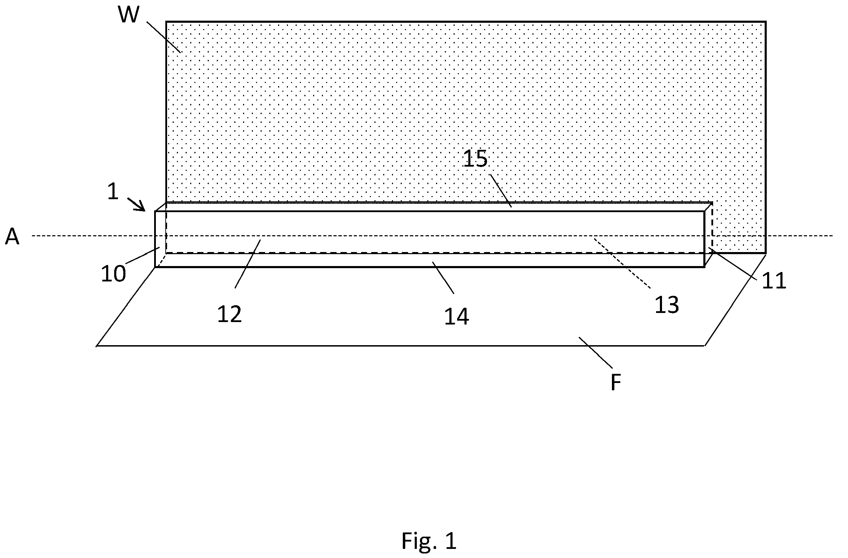

Figure 1 is a generic illustration of a polystyrene profile, such as a polystyrene skirting board 1 attached to a wall W, at the intersection between a wall surface and a floor surface. The skirting board typically rests of the floor F with its lower surface 14.

The profile or skirting board 1 typically extends longitudinally along an axis A, and typically comprises a constant cross-section perpendicular onto the longitudinal axis. It comprises a first end 10 and a second end 11, a front surface 12, a back surface 13, a top surface 15 and a bottom or lower surface 14. In the context of the present disclosure, the front surface 12 corresponds to the part of the surface of the polystyrene profile which is visible when the skirting board is installed. So, the front surface can comprise the top surface 15. Typically, the back surface 13, end surfaces, and bottom surface 14 are not visible after installation. It is though not excluded, that for practical reasons, also the lower surface 14 can be considered to be part of the front surface 12, for instance when the profile is used as a door still. Typically, the lower surface 14 can be considered to be part of the back surface 13.

Polystyrene skirting boards 1 are typically attached to the wall W by means of an adhesive such as glue or double-sided tape, and have the advantage that no screws, nails or other means for fixation are therefore necessary. They are also relatively flexible such that they can follow and mask irregularities in the wall without leaving any gap in between the skirting board 1 and the wall W.

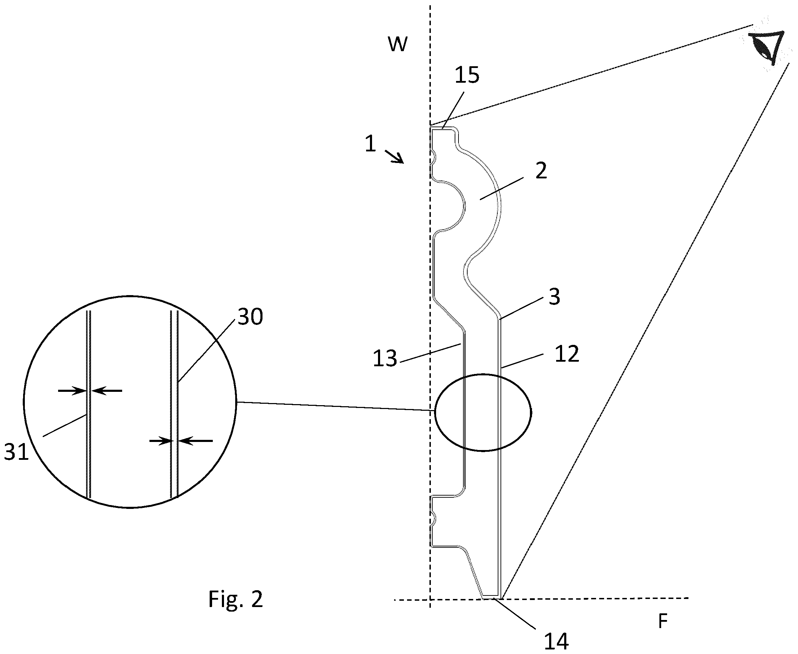

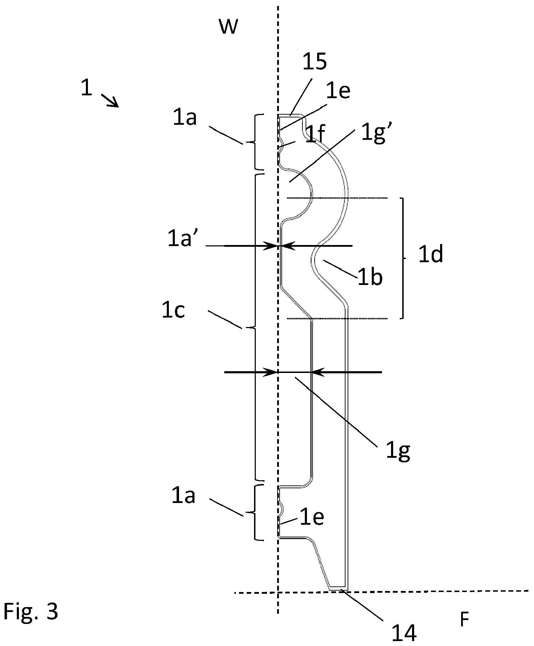

A first embodiment of the present disclosure is depicted in Figures 2 and 3. A composite polystyrene profile 1 extends longitudinally from a first end 10 to a second end 11 and comprises a front surface 12 and a back surface 13, comprising
a. a core portion 2 comprising a polystyrene monopolymer foam extending in the longitudinal direction, the core portion comprising polystyrene foam with a density of the range of 160kg/m³ to 240kg/m³; and
b. a skin portion or layer 3 comprising/consisting of a high impact polystyrene copolymer and surrounding the core portion 2 at least in the longitudinal direction, with a density in the range of 700kg/m³ to 1300kg/m³;
wherein
- the polystyrene profile (1) comprises a combined density within the range of 200 to 360 kg/m³; and
- the skin portion (3) comprises a non-uniform thickness in a transversal direction perpendicular on the longitudinal direction.

It is an effect of a skin layer 3 that provides a continuous envelope around the core portion 2 that the general mechanical stability of the profile or skirting board is improved.

This skirting board 1 is a relatively low cost, lightweight skirting board that is surprisingly robust against impact. Preferably, the core portion 2 further comprises a polystyrene copolymer, which contributes to reducing the risk of brittle cracking of the core portion 2 upon impact of an object on its front surface. The core portion 2 further comprises polybutadiene particles which have an average diameter within the range of 1 to 7 micron.

The skirting board comprises a skin layer 3, 30, 31 which has a different thickness on the back surface 13 (31) than at the front surface 12 (30). The thickness of the skin portion 30 at the front surface 12 and the thickness of the skin portion at the back surface 13 are both constant. In the example shown, the front surface 12 also comprises the top surface 15 and the lower surface 14. Alternatively, the front surface 12 comprises the top surface 15 but does not comprise the lower surface 14.

A thickness of the skin portion 3, 30 at the front surface 12 is within the range of 0.3-1.0 mm. A thickness of the skin portion (3, 31) at the back surface 13 is within the range of 0.3 to 0.9 mm. It was found that the skin portion 31 at the back surface 13, can be made thinner than the skin portion 3 at the front surface 12, saving weight and costs. Its presence was though found to be needed to improve resistance against brittle braking of the back surface of the skirting board upon impact of an object on its front surface.

The material of the skin portion 3 comprises a strain at break of more than 30% and a Young's modulus of more than 1800 MPa. These properties also contribute to the resilience of the skirting board against impact.

The back surface 13 comprises at least two, for instance two, longitudinally extending support portions 1a, the support portions comprising a part of the core portion 2 and part of the skin portion 3,31. In a certain view, the support portions which mainly comprise core portion material are locally reinforced by the skin layer, improving resistance and resilience against impact. The support portions 1a have a lower surfaces 1e which are coplanar and adapted for being provided with an adhesive for attachment to a wall. The lower surfaces may also comprise one or more longitudinally extending grooves 1f to facilitate the application of the glue, installation of the profile, and reduce material cost and weight. It will be appreciated that the skin layer 31 also follows the lower surfaces 1e in the region of the grooves 1f, i.e. the grooves 1f also comprise a portion of the skin layer 3,31.

The skirting board comprises a suspended portion 1c in between two sadjacent support portions 1a, the suspended portion 1c having a length within the range of 1 cm to 50 cm, for instance having a length of about 10 cm. The (reduced thickness) skin layer or portion 31 improves the strength of connection between the support portions 1a and suspended portion 1c. Below the suspended portion a gap 1g is present in between the skirting board 1 and the wall W (or coplanar surface defined by respective surfaces 1e).

The at least two support portions 1a have respective support surfaces 1e which are coplanar. The minimal distance between the suspended portion 1c and a plane defined by respective coplanar support portion surfaces 1e is at least 0.5 mm, but can be larger.

It can be noted that the distance between the suspended portion and a plane defined by respective coplanar surfaces 1e of support portions 1a varies along the extent of the suspended portion. In this case between for instance 0.5 and 20 mm.

The suspended portion itself comprises a front surface and back surface. The back surface is substantially planar, but comprises an extension 1d (or dynamic support portion 1a') extending towards (but not reaching) a plane defined by the coplanar surfaces 1e of the respective support portions 1a. The extension 1d extends also longitudinally, parallel to the support portions 1a. For instance, such an extension may be continuous in the longitudinal direction, or may be embodied as one or more protrusions of the back surface of the suspended portion, arranged along a line parallel to the longitudinal axis. This provides the additional advantage that the suspended portion will receive additional support from the extensions after an initial deformation of the suspended portion, upon impact of an object on the front surface of the suspended portion. It will be appreciated that the extension 1d comprises a skin layer 3 on both its front and back surfaces. At the location of the extension 1d (or dynamic support portion 1a'), the front surface 12, or front surface of the support portion, may comprise a recess or groove 1b, which extends longitudinally and which is comprising a corresponding portion of the skin layer 3.

Preferably, the skirting board comprises a constant cross-section perpendicular onto the longitudinal axis. In alternative embodiments the cross-section varies in a regular manner. For instance, it can be substantially constant along the length of the skirting board, for instance constant in all features apart from the extension 1d. The extension 1d can for instance also comprise a regular repetition of local protrusions of limited length in the longitudinal direction, along the longitudinal direction.

Preferably, the suspended portion is positioned at a relevant height for typical impact, for instance it can be arranged at a distance from the lower surface 14 within a range of 1 to 50 cm.

The core portion 2 comprises a constant average foam density, in both the transversal direction and the longitudinal direction.

The cell diameter distribution of the core portion 2 is such that 50 % of all cells has a diameter of 100 µm or less and 95% of all cells has a diameter of 400 µm or less.

The core portion 2 comprises a compression strength of al least 2 N/mm².

The adhesion strength of the skin portion 3 to the core portion 2 is within the range of 2-7 N/mm².

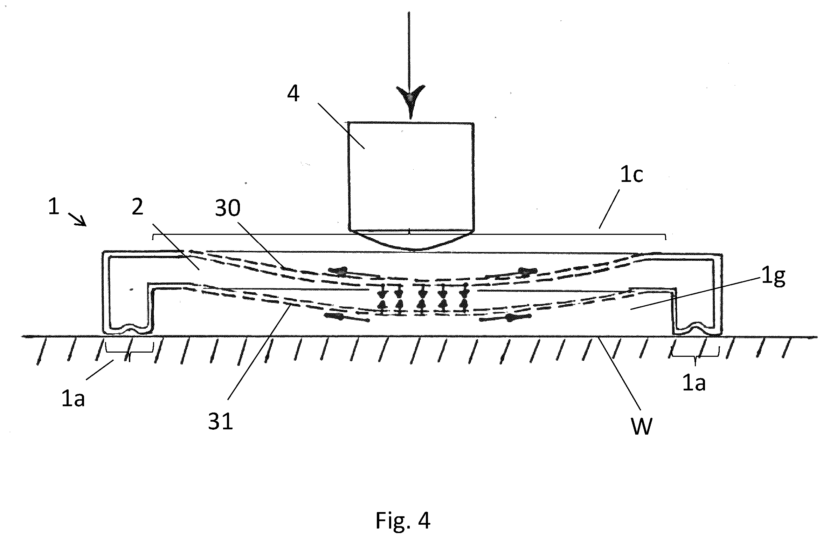

In alternative embodiments, the back surface of the suspended portion 1c is fully planar, as for instance shown in a further embodiment in relation with Fig. 4. This embodiment is similar to the first embodiment, but does not comprise the extension 1d. The back surface of the suspended portion 1c can for instance be parallel or substantially parallel with a plane defined by respective coplanar surfaces 1e of support portions 1a.

Fig. 4 illustrates the behaviour embodiments of the present disclosure when exposed to impact loads. It will be appreciated that this is a generic representative of a variety of products having the claimed features, including the embodiments set out in relation with Fig. 2 and Fig. 3. When an object 4 impacts on the suspended portion 1c of the skirting board 1, the suspended portion 1c deforms in a more resilient manner when compared to state of the art skirting boards, while having a reduced probability of brittle breaking of the suspended portion. The support portions, and thus their respective portions of the skin layer 3, are fixed to a wall W, for instance by gluing. Stresses introduced by the impact of object 4 are distributed both in the skin layer 3, 30 at the front surface 12 as well as in the skin layer 3, 31 at the back surface, which both deform elastically. Because the presence of the skin layer on the support portions 1a (and their surfaces 1e) and the continuous extension thereof towards the suspended portion, an improved resilience and robustness against impact has been witnessed. Below the suspended portion 1c, the elastic deformation zone or gap 1g can provide space for such a downward movement upon impact. If the gap 1g is relatively small the wall W itself may also provide support for the suspended portion 1c against breaking.

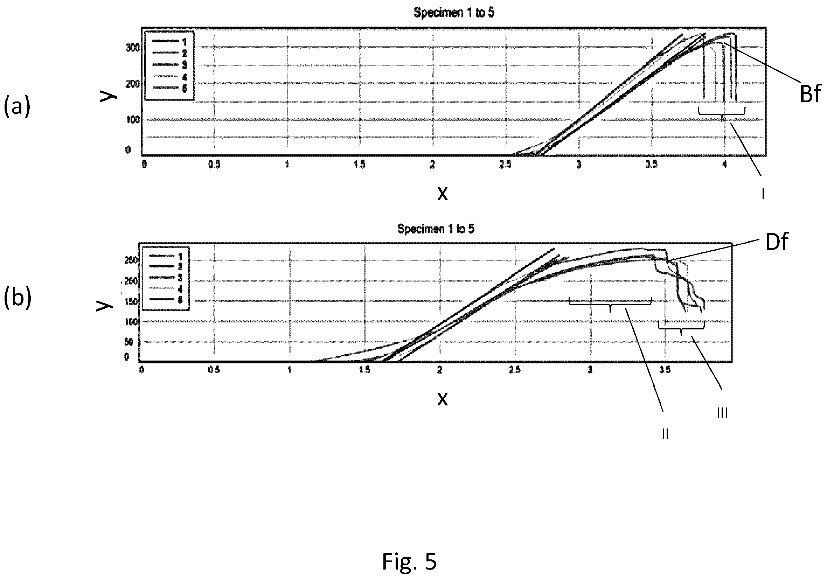

Comparative bending tests were also performed on products according to embodiments of the present disclosure and reference state of the art skirting boards. The results are illustrated in the graphs of Fig. 5, showing displacement x (in mm) versus applied force y (in N). Fig. 5 (a) illustrates the results for the reference state of the art profiles, while Fig. 5 (b) illustrates the results for products according to embodiments of the present disclosure. For each type, 5 identical specimen were tested. The state of the art reference profiles showed a relatively narrow zone of displacement behaviour I in which a more abrupt, brittle fracture (Bf) of the suspended portion and thus skirting board occurs at a certain force threshold or threshold range. The claimed profiles thought show a more stabile behaviour, whereby clearly a second zone of displacement behaviour II exists for higher forces, which deviates from the displacement behaviour at lower applied forces, but for which no failure occurs. This corresponds to plastic deformation and the ability to absorb mechanical energy. Also, there is a third zone of displacement behaviour III for even higher applied forces, where a gradual, stepwise increase in failure occurs, a behaviour associated with ductile fracture (Df), which is still better and different from the brittle failure in zone I of the prior art.

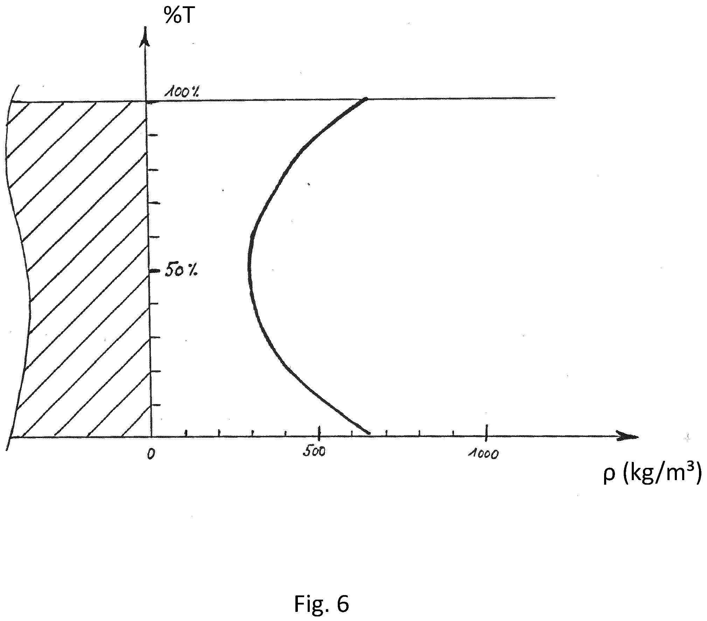

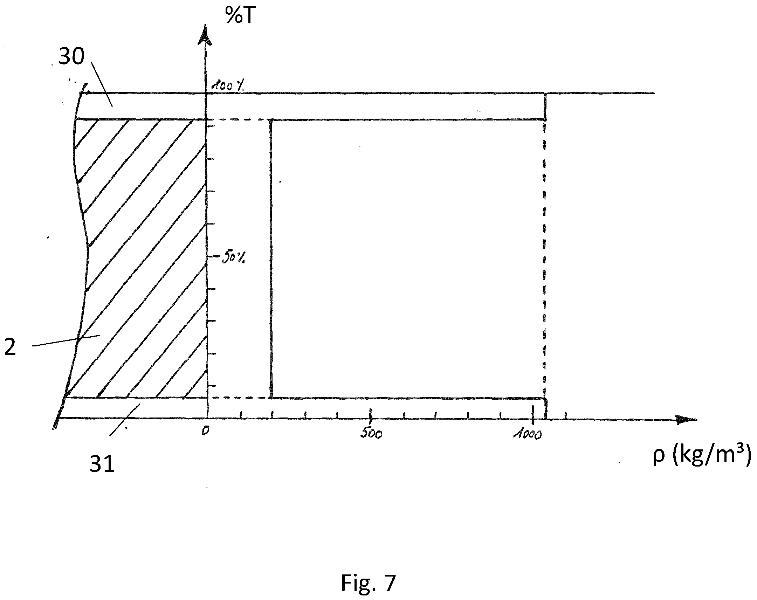

Fig. 6 and Fig. 7 illustrate respective foam density distribution of the reference product (also without a skin layer) and typical embodiments of the present disclosure. The respective graphs show relative depth position within the profile (y-axis) versus material density ρ (in kg/m³; x-axis). The reference product shows a varying density along the depth of the product, with a density at the centre of about 300kg/m³ and a density at the outside of the product of about 650 kg/m³. The products according to embodiments of the present disclosure show the core portion 2 and skin portions 3 (the latter having different thickness at opposite sides of the skirting boards (30, 31)). The core portion 2 has a constant material density of about 200 kg/m³ along its depth profile (as well as along its longitudinal direction). The skin portion 3 has a constant material density of about 1040 kg/m³ along its depth profile. It is believed that these features contribute to the better performance of the profiles according to the present disclosure, at reduced weight.

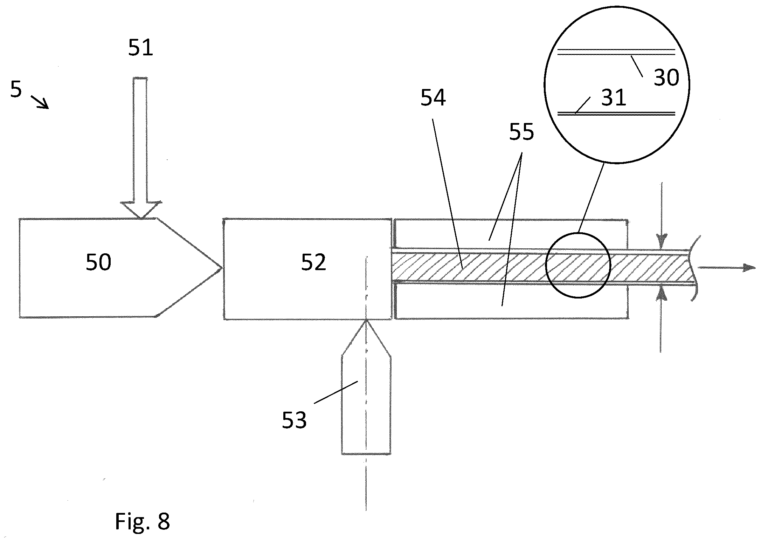

Fig. 8 illustrates a typical manufacturing setup and process allowing the manufacturing of the claimed composite polystyrene profiles.

The process comprises plasticizing a core polymer composition in a first extruder 50, the core polymer composition comprising a polystyrene monopolymer, a nucleating agent and a physical blowing agent. The physical blowing agent 51 is added in a dosed manner to the first extruder and is preferably CO₂. Preferably, CO₂ is present in the core polymer composition in an amount of 0.5 to 2 wt%, preferably 0.6 to 1.5 wt%, more preferably 0.8 to 1.2 wt%.

According to preferred embodiments, the core polymer composition comprises a General Purpose polystyrene material (GPPS) and a High Impact polystyrene material (HIPS). The HIPS material preferably constitutes between 5 and 25 % of the core material, more preferably between 10 and 20 %. The GPPS material preferably constitutes between 70 and 90% of the core material, more preferably between 75 and 85 %.

Preferably the core portion further comprises a polystyrene copolymer. Preferably the HIPS core portion comprises a polystyrene copolymer. The polystyrene copolymer preferably comprises or consists of polybutadiene.

A skin polymer composition is extruded in a second or skin extruder 53, the skin polymer composition comprising a polystyrene copolymer.

Preferably the skin polymer composition comprises or consists of a polystyrene copolymer. Preferably, the skin portion comprises or consists of a high impact polystyrene copolymer. Preferably the high impact polystyrene copolymer comprises or consists of HIPS or ABS.

Then, the plasticized core polymer composition is fed to a coextrusion mould 52 to form a core portion 2.

Thereafter, preferably directly thereafter, the skin polymer composition is fed to the coextrusion mould 52 so as to form a plastic composite 54 having a core portion 2 and a skin portion 3 made of the skin polymer composition surrounding and welded to the core portion 2.

Next, preferably directly thereafter, the plastic composite 54 obtained at the end of the previous step is passed into a cooled calibration unit 55, to cool and stabilize the shape of the plastic composite 54. When leaving the calibrator 55, the product has its final shape and properties and can be cut into parts or skirting boards 1.

The skin portion 3 is thereby provided with a non-uniform thickness in a transversal direction perpendicular on the longitudinal direction. This can be achieved by providing a difference in flow rate of said skin polymer composition towards said core portion 2.

According to preferred embodiments, the core polymer composition comprises a polystyrene monopolymer and is processed in the mould at a temperature within the range of 140°C to 152°C, preferably between 144°C and 148°C, and the skin polymer composition is processed in the mould at a temperature within the range of 165°C to 185 °C, more preferably within the range of 170°C to 180 °C.

Preferably, the core polymer composition is plasticised at a temperature substantially higher than 152°C (or 148°C) and cooled before entry in the coextrusion mould.

Preferably, vacuum suction technology is used in the cooled calibration unit 55, improving the formation of sharp details in the polystyrene profiles.

It is to be understood that although preferred embodiments, specific constructions and configurations, as well as materials, have been discussed herein for devices according to the present invention, various changes or modifications in form and detail may be made without departing from the scope and spirit of this invention. Steps may be added or deleted to methods described within the scope of the present invention.
1. A composite polystyrene profile (1) extending longitudinally from a first end (10) to a second end (11) and comprising a front surface (12) and a back surface (13), comprising
   a. a core portion (2) comprising a polystyrene monopolymer foam extending in the longitudinal direction, the core portion comprising polystyrene foam with a density of the range of 160kg/m³ to 240kg/m³;
   b. a skin portion (3) comprising/consisting of a (high impact) polystyrene copolymer and surrounding the core portion (2) at least in the longitudinal direction, with a density in the range of 700kg/m³ to 1300kg/m³;
   wherein
   - the polystyrene profile (1) comprises a combined density within the range of 200 to 360 kg/m³; and
   - the skin portion (3) comprises a non-uniform thickness in a transversal direction perpendicular to the longitudinal direction.
2. A composite polystyrene profile according to item 1, wherein the core portion (2) further comprises a polystyrene copolymer.
3. A composite polystyrene profile according to any of the previous items, wherein a variation of the non-uniform thickness in the transversal direction of the skin portion (3) between minimal thickness at the front surface (12) and a minimal thickness at the back surface (13) is more than 15%, the minimal thickness at the back surface (13) being smaller than the minimal thickness at the front surface (12).
4. A composite polystyrene profile according to item 3, wherein the thickness of the skin portion (3) at the front surface (12) and the thickness of the skin portion at the back surface (13) is constant.
5. A composite polystyrene profile according to any of the previous items, wherein a thickness of the skin portion (3, 30) at the front surface (12) is within the range of 0.3-1.0 mm, and the thickness of the skin portion (3, 31) at the back surface (13) is within the range of 0.3 to 0.9 mm.
6. A composite polystyrene profile according to any of the previous items, wherein a material of the skin portion (3) comprises a strain at break of more than 30% and a Young's modulus of more than 1800 MPa.
7. A composite polystyrene profile according to any of the previous items, wherein the back surface (13) comprises at least two longitudinally extending support portions (1a), the support portions comprising a part of the core portion (2) and part of the skin portion (3,31).
8. A composite polystyrene profile according to item 7, comprising a suspended portion (1c) in between two adjacent support portions (1a), the suspended portion (1c) having a length within the range of 1 cm to 50 cm.
9. A composite polystyrene profile according to item 7 or 8, wherein the at least two support portions (1a) have respective support surfaces (1e) which are coplanar, and wherein a minimal distance between the suspended portion (1c) and a plane defined by respective coplanar support portions (1e) is at least 0.5 mm.
10. A composite polystyrene profile according to any of items 8 to 9, comprising a lower surface (14), and wherein the suspended portion (1c) is arranged at a distance from the lower surface (14) within a range of 1 to 50 cm.
11. A composite polystyrene profile according to any of the previous items, wherein the core portion (2) comprises a constant average foam density, in at least the transversal direction.
12. A composite polystyrene profile according to any of the previous items, wherein a cell diameter distribution of the core portion (2) is such that 50 % of all cells has a diameter of 100 µm or less and 95% of all cells has a diameter of 400 µm or less.
13. A composite polystyrene profile according to any of the previous items, wherein the core portion (2) comprises a compression strength of at least 2 N/mm².
14. A composite polystyrene profile according to any of the previous items, wherein the core portion (2) further comprises polybutadiene particles which have an average diameter within the range of 1 to 7 micron.
15. A composite polystyrene profile according to any of the previous items, wherein an adhesion strength of the skin portion (3) to the core portion (2) is within the range of 2-7 N/mm².
16. A composite polystyrene profile according to any of the previous items, comprising sharp edges having a radius R of 1 mm or less.
17. A composite polystyrene profile according to any of the previous items, manufactured by a coextrusion process.
18. A composite polystyrene profile according to any of the previous items, which does not comprise residues of oil.
19. A composite polystyrene profile according to any of the previous items, further comprising a primer layer on the front surface (12).
20. Method of manufacturing a composite polystyrene (1) profile according to any of the previous items, the process comprising the steps of:
   a) plasticizing a core polymer composition in a first extruder, the core polymer composition comprising a polystyrene monopolymer, a nucleating agent and a physical blowing agent;
   b) plasticizing a skin polymer composition in a second extruder, the skin polymer composition comprising a polystyrene copolymer;
   c) feeding the plasticized core polymer composition to a coextrusion mould to form a core portion (2);
   d) after step (c), feeding the skin polymer composition to the coextrusion mould so as to form a plastic composite having a core portion (2) and a skin portion (3) made of the skin polymer composition surrounding and welded to the core portion (2);
   e) passing the plastic composite obtained at the end of step (d) in a cooled calibration unit, to cool and stabilize the shape of the plastic composite,
   wherein the skin portion (3) is provided with a non-uniform thickness in a transversal direction perpendicular on the longitudinal direction.
21. Method according to item 20, wherein the non uniform thickness of the skin portion (3, 30, 31) is achieved by providing a difference in flow rate of the skin polymer composition towards the core portion (2).
22. Method according to any of items 20 to 21, wherein step (e) is provided directly after step (d).
23. Method according to any of items 20 to 22, wherein the physical blowing agent is CO₂.
24. Method according to any of items to 20 to 23, wherein the CO₂ is present in the core polymer composition in an amount of 0.5 to 2 wt%, preferably 0.6 to 1.5 wt%, more preferably 0,8 to 1,2 wt%.
25. Method according to any of items 20 to 24, wherein the core polymer composition comprises a polystyrene monopolymer and is processed in the mould at a temperature within the range of 140°C to 152°C, preferably between 144°C and 148°C, and the skin polymer composition is processed in the mould at a temperature within the range of 165°C to 185 °C, more preferably within the range of 170°C to 180 °C.
26. Method according to any of items 20 to 25, comprising plasticizing the core polymer composition at a temperature substantially higher than 152°C (or 148°C) and cooling the core polymer composition before entry in the coextrusion mould.
27. Method according to any of items 20 to 26, comprising using vacuum suction technology in the cooled calibration unit.
28. Method according to any of items 20 to 27, comprising controlling and adapting the feedthrough speed of the plasticised core and skin polymer compositions during the manufacturing process.

## Claims

1. A composite polystyrene profile (1) extending longitudinally from a first end (10) to a second end (11) and comprising a front surface (12) and a back surface (13), comprising
a. a core portion (2) comprising a polystyrene monopolymer foam extending in the longitudinal direction, the core portion comprising polystyrene foam with a density of the range of 160kg/m³ to 240kg/m³;
b. a skin portion (3) comprising/consisting of a polystyrene copolymer and surrounding the core portion (2) at least in the longitudinal direction, with a density in the range of 700kg/m³ to 1300kg/m³;
wherein
- the polystyrene profile (1) comprises a combined density within the range of 200 to 360 kg/m³; and
- the skin portion (3) comprises a non-uniform thickness in a transversal direction perpendicular to the longitudinal direction.

2. A composite polystyrene profile according to claim 1, wherein the core portion (2) further comprises a polystyrene copolymer.

3. A composite polystyrene profile according to any of the previous claims, wherein a variation of the non-uniform thickness in the transversal direction of the skin portion (3) between minimal thickness at the front surface (12) and a minimal thickness at the back surface (13) is more than 15%, the minimal thickness at the back surface (13) being smaller than the minimal thickness at the front surface (12).

4. A composite polystyrene profile according to claim 3, wherein the thickness of the skin portion (3) at the front surface (12) and the thickness of the skin portion at the back surface (13) is constant.

5. A composite polystyrene profile according to any of the previous claims, wherein a thickness of the skin portion (3, 30) at the front surface (12) is within the range of 0.3-1.0 mm, and the thickness of the skin portion (3, 31) at the back surface (13) is within the range of 0.3 to 0.9 mm.

6. A composite polystyrene profile according to any of the previous claims, wherein the back surface (13) comprises at least two longitudinally extending support portions (1a), the support portions comprising a part of the core portion (2) and part of the skin portion (3,31).

7. A composite polystyrene profile according to claim 6, comprising a suspended portion (1c) in between two adjacent support portions (1a), the suspended portion (1c) having a length within the range of 1 cm to 50 cm.

8. A composite polystyrene profile according to claim 6 or 7, wherein the at least two support portions (1a) have respective support surfaces (1e) which are coplanar, and wherein a minimal distance between the suspended portion (1c) and a plane defined by respective coplanar support portions (1e) is at least 0.5 mm.

9. A composite polystyrene profile according to any of claims 7 to 8, comprising a lower surface (14), and wherein the suspended portion (1c) is arranged at a distance from the lower surface (14) within a range of 1 to 50 cm.

10. A composite polystyrene profile according to any of the previous claims, wherein the core portion (2) comprises HIPS.

11. A composite polystyrene profile according to any of the previous claims, wherein the core portion (2) comprises polybutadiene particles which have an average diameter within the range of 1 to 7 micron.

12. A composite polystyrene profile according to any of the previous claims, comprising sharp edges having a radius R of 1 mm or less.

13. A composite polystyrene profile according to any of the previous claims, which does not comprise residues of oil.

14. A composite polystyrene profile according to any of the previous claims, further comprising a primer layer on the front surface (12).

15. An apparatus for manufacturing a composite polystyrene profile according to any of the previous claims, the apparatus comprising:
- a first extruder for plasticizing a core polymer composition;
- a second extruder for plasticizing a skin polymer composition;
- a coextrusion mould for forming a core portion and a plastic composite having the core portion and a skin portion made of said skin polymer composition surrounding and welded to said core portion; and
- a calibration unit to cool and stabilize the shape of said plastic composite;
wherein the apparatus is adapted for providing the skin portion with a nonuniform thickness in a transversal direction perpendicular on said longitudinal direction.
